Europäisches Patentamt

European Patent Office

Office européen des brevets

(19)

(11) Veröffentlichungsnummer: **0 217 893**
**B1**

(12) **EUROPÄISCHE PATENTSCHRIFT**

(45) Veröffentlichungstag der Patentschrift:
**14.09.88**

(51) Int. Cl.⁴: **A 01 K 13/00**

(21) Anmeldenummer: **86902377.0**

(22) Anmeldetag: **20.03.86**

(86) Internationale Anmeldenummer:
**PCT/EP 86/00162**

(87) Internationale Veröffentlichungsnummer:
**WO 86/05356 (25.09.86** Gazette **86/21)**

(54) **VORRICHTUNG ZUM ABTROCKNEN VON PFERDEN ODER DGL.**

(30) Priorität: **22.03.85 DE 8508490 U**

(43) Veröffentlichungstag der Anmeldung:
**15.04.87 Patentblatt 87/16**

(45) Bekanntmachung des Hinweises auf die Patenterteilung:
**14.09.88 Patentblatt 88/37**

(84) Benannte Vertragsstaaten:
**AT BE CH DE FR GB IT LI LU NL SE**

(56) Entgegenhaltungen:
**NL - C - 73 010**
**US - A - 3 108 568**

(73) Patentinhaber: **KRIEGER, Max, Scherpenseelerstr. 39,
D-5180 Eschweiler (DE)**

(72) Erfinder: **KRIEGER, Max, Scherpenseelerstr. 39,
D-5180 Eschweiler (DE)**

(74) Vertreter: **Bauer, Wulf, Dr., Wolfgang-Müller-Strasse 12,
D-5000 Köln 51 (Marienburg) (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Neuerung betrifft eine Vorrichtung zum Abtrocknen von Pferden oder dgl.

Aus der NL-C-73 010 ist bereits eine Stalldecke bekannt, die auf der dem Tier zugewandten Innenseite zwei mit Öffnungen versehene Kanäle zur Ableitung von unter der Innenseite der Decke befindlicher feuchter Luft aufweist.

Bekanntlich transpirieren Pferde nach Beanspruchung in sehr beträchtlichem Masse. Es ist dann, um Erkältungen des Pferdes zu vermeiden, erforderlich, das nasse Fell in einem möglichst zugfreien Raum zu trocknen, was mit erheblichem Zeit- und Arbeitsaufwand verbunden ist. Da das Tier während dieser Zeit oft in Zugluft steht, ist auch bei relativ rascher Abtrocknung eine gewisse Erkältungsgefahr gegeben.

Der Neuerung liegt die Aufgabe zugrunde, eine Vorrichtung zum Abtrocknen der Pferde zu schaffen, die mit einem Minimum an Arbeits- und Zeitaufwand eine schonende Abtrocknung des Tieres ermöglicht und dieses während des Abtrocknungsvorganges gegen Zugluft schützt.

Die Lösung der gestellten Aufgabe besteht in den kennzeichnenden Merkmalen des Anspruches 1.

Die Vorrichtung gemäss der Neuerung eignet sich zum Abtrocknen des verschwitzten oder nassen Felles nach Beanspruchung oder Nasswäsche des Pferdes. Durch die Strömungskanäle wird Warmluft auf das Tierfell geblasen. Die sich unter dem Umhang mit Verdunstungsfeuchtigkeit aufladende Luft verlässt das sich unter dem Umhang bildende Luftkissen durch die Perforationslöcher und bewirkt eine rasche Abtrocknung des Felles.

Diese Vorrichtung erlaubt ein Abtrocknen des Pferdes auch bei kälteren Aussentemperaturen z.B. nach der Nasswäsche, Turnier oder Ausritt sowohl im Stall, als auch in der Stallgasse oder gar im Freien, da das Tier durch den Umhang gegen Zugluft geschützt ist. Sie eignet sich für Sommer- und Winterfell.

Nachstehend ist die Vorrichtung anhand eines in der Zeichnung dargestellten Ausführungsbeispieles erläutert. Es zeigen:

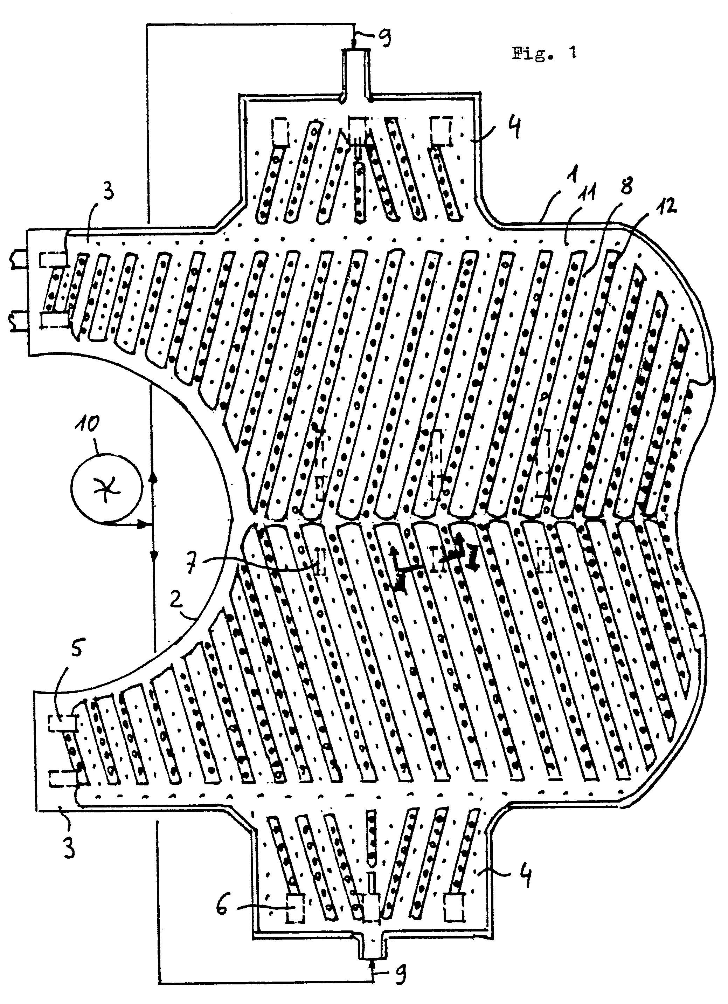

Fig. 1 eine Unteransicht der Vorrichtung und

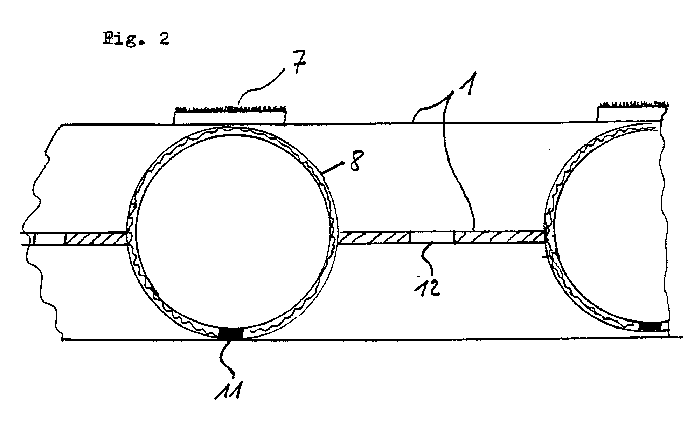

Fig. 2 eine Einzelheit im vergrösserten Querschnitt nach der Linie II-II in Fig. 1.

Die Zeichnung zeigt einen Umhang 1 aus luftundurchlässigem gewebe- oder folienartigem Werkstoff, z.B. Kunststoff oder gummiertem Gewebe, der in der Form einer üblichen Stalldecke zugeschnitten ist. Er weist einen halbrunden Ausschnitt 2 und zwei seitliche Lappen 3 für den Halsteil sowie links und rechts je einen zusätzlichen Lappen 4 für den Bauchteil des Tieres auf. Auf der Oberseite des Umhanges 1 befinden sich Klettverschlussstreifen 5, 6 zum Befestigen des Umhanges am Pferd. Weitere Klettverschlussstreifen 7 am Mittelteil des Umhanges 1 ermöglichen eine Verkleinerung der Umhangsfläche bei kleineren Tieren.

Der Umhang weist eine Vielzahl von auf seiner Fläche verteilt angeordneter Strömungskanäle 8 für warme oder kalte Luft. Diese können in beliebigem Muster angeordnet sein, z.B. parallel im Fischgrätmuster oder dgl. und sind an ihren Enden verschlossen.

Alle Strömungskanäle 8 sind an mindestens einen Einlasskanal 9 angeschlossen, der mit dem Gebläse 10 verbindbar ist. Dieses weist nach Art eines Föns eine regelbare, nicht dargestellte Heizeinrichtung auf. Beim Ausführungsbeispiel weist jeweils eine Hälfte des Umhanges 1 ein Strömungskanalsystem mit einem Einlasskanal 9 auf.

Auf der dem Tier zugewandten Innenseite des Umhanges 1 sind die Strömungskanäle 8 mit einer Vielzahl kleiner Luftaustrittsöffnungen 11 versehen. Zwischen den Strömungskanälen 8 befindet sich im Umhang 1 eine Vielzahl von Perforationsöffnungen 12.

Die Vorrichtung wird am durchnässten Tier mittels der Klettverschlussstreifen 5, 6 befestigt und das mit der Heizeinrichtung versehene Gebläse 10 angeschlossen. Die einströmende Warmluft bläst die Strömungskanäle 8 auf, die zu Polstern werden, und strömt unter Bildung eines Luftkissens in den Zwischenraum zwischen Fell und Umhang.

Durch die einströmende Warmluft erfolgt eine rasche Verdunstung. Die mit Feuchtigkeit aufgeladene Warmluft tritt durch die Perforationslöcher 12 ins Freie aus. Auf diese Weise erfolgt eine rasche, schonende Abtrocknung des Tieres, das während dieses Vorganges unter dem Umhang gegen Zugluft geschützt ist.

Die Neuerung lässt sich auch für andere Tiere anwenden. In diesem Falle muss der Umhang entsprechend zugeschnitten sein.

**Patentansprüche**

1. Vorrichtung zum Abtrocknen von Pferden oder dgl., die einen Umhang (1) aus gewebeartigem oder ähnlichem Werkstoff in der Zuschnittform einer Stalldecke und mit Luftöffnungen auf der — dem Tier zugewandten — Innenseite des Umhanges versehene Strömungskanäle (8) aufweist, dadurch gekennzeichnet, dass der Umhang (1) aus luftundurchlässigem, gewebe- oder folienartigem Werkstoff, z.B. Kunststoff, vorgesehen ist, der eine Vielzahl der obengenannten Strömungskanäle (8) für kalte oder warme Luft aufweist, die mit mindestens einem, mit einem Gebläse (10) verbindbaren Einlasskanal (9) verbunden sind, dass die Strömungskanäle auf der — dem Tier zugewandten — Innenseite des Umhanges (1) eine Vielzahl kleiner Luftaustrittsöffnungen (11) aufweisen und dass im Umhang (1) zwischen den Strömungskanälen (8) eine Vielzahl von Perforationslöchern (12) zur Ableitung von unter der Innenseite des Umhanges (1) befindlicher feuchter Luft vorgesehen ist.

2. Vorrichtung nach Anspruch 1, dadurch gekennzeichnet, dass das Gebläse (10) mit zwei Einlasskanälen (9) verbunden ist.

3. Vorrichtung nach Anspruch 1 oder 2, dadurch gekennzeichnet, dass auf der Oberseite des Umhanges (1) Klettverschlussstreifen (5, 6 bzw. 7) zur Befestigung und/oder Grössenveränderung des Umhanges (1) vorgesehen sind.

4. Vorrichtung nach Anspruch 2 oder 3, dadurch gekennzeichnet, dass jeweils eine Hälfte des Umhanges (1) mit einem Einlasskanal (9) versehen ist.

## Claims

1. Apparatus for drying horses, or other animals, comprising a wrap (1) made of fabric or similar material cut in the form of a stable blanket and which is provided with air outlets of flow ducts (8) on the inner face of the wrap — towards the animal —, characterized in that the wrap (1) is made of a fabric or a foil material impermeable by air, e.g. a synthetic, disposing of a large number of the said flow ducts (8) for warm or cold air, which are connected with at least one blower (10) which may be connected with an inlet duct (9), that the flow ducts (8) on the inner face of the wrap (1) — towards the animal — are provided with a large number of small air-exit openings (11), and that in the wrap (1) between the flow ducts (8) a lot of perforation holes (12) are provided for the draining-off of the humid air existing under the inside of the wrap (1).

2. Apparatus according to claim 1, characterized in that the blower (10) is connected with two inlet ducts (9).

3. Apparatus according to claim 1 or 2, characterized by the fact that on the upper part of the wrap (1) there are Velcro strap fastenings (5, 6, 7 respectively) for the fixing and/or changing of the size of the wrap (1).

4. Apparatus according to claim 2 or 3, characterized in that one half of the wrap (1) each is provided with an inlet duct (9).

## Revendications

1. Dispositif de séchage de chevaux et d'animaux similaires qui comporte une cape (1) de tissu ou de matériel semblable coupée sous forme d'une couverture d'étable munie d'évents et de canaux d'air (8) qui se trouvent en face de la peau de l'animal sur le côté intérieur de la cape, caractérisé en ce que la cape (1) est fait d'une matière de tissu ou de feuille qui est imperméable à l'air, p.e. de matière synthétique, et munie de nombreux canaux d'air (8), susmentionnés, pour de l'air froid ou chaud qui sont reliés avec au moins un canal d'entrée (9) reliable avec une soufflerie (10), en ce que les canaux d'air (8) ont de nombreux évents (11) qui se trouvent en face de la peau de l'animal sur le côté interieur de la cape (1), et en ce que dans la cape (1) il y a entre les canaux d'air (8) de nombreuses perforations (12) pour la dérivation de l'air humide se trouvant au-dessous du côté intérieur de la cape (1).

2. Dispositif selon la revendication 1, caractérisé en ce que la soufflerie (10) est reliée avec deux canaux d'entrée (9).

3. Dispositif selon la revendication 1 ou 2, caractérisé en ce que la partie dorsale de la cape (1) est munie de bandes de fermetures velcro (5, 6, respectivement 7) pour la fixation ou pour le changement de la dimension de la cape (1).

4. Dispositif selon la revendication 2 ou 3, caractérisé en ce que chaque moitié de la cape (1) est munie d'un canal d'entreé (9).

Fig. 1

Fig. 2